# EUROPEAN PATENT APPLICATION

(11) **EP 1 260 655 A1**
(43) Date of publication of application: **27.11.2002**
(21) Application number: 02076916.2
(22) Date of filing: 16.05.2002
(51) Int. Cl.: E04F 15/22, B32B 7/00

(54) **Finishing layer for a floor**

(30) Priority: 21.05.2001 NL 1018121
(71) Applicant: Descol Kunststof Chemie B.V., 7400 AK Deventer (NL)
(72) Inventor: Pilon, Jacob Jan, 7213 CE Gorssel (NL)
(74) Representative: Dokter, Hendrik Daniel

(57) **Abstract**

Finishing layer for a floor, comprising a first layer of a compressible material for laying on said floor, a second layer of a substantially non-compressible material for laying on said first layer and a top layer for laying on said second layer, wherein the second layer is assembled from mats which are each manufactured from mutually parallel strips of a non-compressible material. Use of such a finishing layer for a floor in a sports accommodation.

## Description

The invention relates to a finishing layer for a floor, comprising a first layer of a resilient material for laying on said floor, a second layer of a substantially non-compressible material for laying on said first layer and a top layer for laying on said second layer.

Such a finishing layer produces a resilient floor construction wherein the top layer can impart to the floor a so-called point-elastic nature, and the second layer resting on an elastic first layer imparts to the floor a pressure-distributing or so-called area-elastic nature. This finishing layer is for instance intended for use as floor covering in a sports hall.

A surface-resilient sports floor construction is known wherein the second layer consists of a stack of two pieces of chipboard or two boards of multi-ply material with a total thickness of about 16 to 24 mm.

The known sports floor construction has the drawback of having a relatively great mass inertia and little flexibility, as a result of which the floor only comes into motion slowly under load, and can be perceived as uncomfortable by sportsmen/women. Owing to the total thickness and the mass resulting therefrom, the laying of the known finishing layer is labour-intensive and thereby relatively expensive.

It is an object of the invention to provide a finishing layer which has a low mass inertia, which is set rapidly into motion under load and which is perceived as comfortable by sportsmen.

It is a further object to provide a finishing layer which has a small total thickness and a mass resulting therefrom, and which can be arranged on a floor quickly and in simple and cost-saving manner.

These objectives are achieved with a finishing layer of the type specified in the preamble, wherein according to the invention the second layer is assembled from mats, which are each manufactured from mutually parallel strips of a non-compressible material.

A finishing layer according to the invention provides the additional significant advantage that the second layer is less rigid than the second layer in known finishing layers, as a result of which the choice for the first layer can be made from materials with greater firmness and the greater durability associated therewith, with a greater comfort in use.

In an embodiment of a finishing layer according to the invention the second layer comprises a stack of at least two mats, wherein the mutually parallel strips of a second mat stacked on a first mat in each case preferably cross the mutually parallel strips of this first mat at a determined angle.

By having the strips cross in a second layer assembled from a plurality of stacked mats the uniformity of the bending properties and the mechanical loading capacity of the floor finishing are enhanced.

In a favourable embodiment of a finishing layer according to the invention, wherein the second layer comprises a stack of n mats, wherein n is a whole number 2, 3 or 4, the determined angle at which the parallel strips of respective mats cross each other amounts to 180°/n.

It has been found that a finishing layer is obtained possessing excellent bending properties and mechanical loading capacity if, according to the invention, the second layer comprises a stack of three mats, wherein the mutually parallel strips of a second mat stacked on a first mat cross the mutually parallel strips of this first mat at an angle of 60°, and the mutually parallel strips of a third mat stacked on a second mat cross the mutually parallel strips of this second mat at an angle of 60°, in a manner such that the mutually parallel strips of the third and of the first mat cross each other at an angle of 120°.

In one embodiment the non-compressible material is wood.

The non-compressible material is preferably bamboo.

Bamboo is a non-compressible, very flexible material. It has been found that a stack of mats of bamboo strips forms a board which distributes a force exerted thereon in surface-isotropic manner, i.e. uniformly in all directions along the surface of this board. Bamboo moreover has the advantage of being a durable, natural material which can be employed without depleting the source.

In an embodiment the at least two mats in the stack in the second layer are adhered to each other by means of an elastic adhesive, for instance a glue on the basis of polyurethane (PUR).

The first layer in a finishing layer according to the invention comprises for instance a rubber granulate or a plastic foam material, or a combination of both materials.

According to the German standard DIN 18032-2 a distinction is made between an area-elastic, a point-elastic, a combined elastic and a mixed-elastic sports floor.

The nature of a finishing layer serving as sports floor can be determined by a suitable choice of material of the first layer and the assembly of the top layer.

The top layer in a finishing layer according to the invention for instance comprises a hard plastic material, for instance one of the materials polyvinyl chloride (PVC), linoleum or polyurethane (PUR), whereby an area-elastic or a mixed-elastic sports floor is obtained, depending on the assembly of the first and the second layer.

In yet another embodiment the top layer is assembled from at least two layers, for instance of a bottom layer of a resilient material and a cover layer of an elastic plastic material covering this bottom layer, whereby a combined elastic or a mixed-elastic sports floor is obtained, depending on the assembly of the first and the second layer.

In yet another embodiment the top layer is assembled from at least two layers, for instance of a bottom layer of a resilient material and a cover layer of a hard plastic material covering this bottom layer, whereby a combined elastic or a mixed-elastic sports floor is obtained, depending on the assembly of the first and the second layer.

The invention further relates to the use of an above described finishing layer in a sports accommodation.

The invention will be elucidated hereinbelow on the basis of an embodiment, with reference to the drawings.

In the drawings:
Fig. 1 shows in top view an embodiment of a finishing for a floor according to the invention, and
Fig. 2 shows the floor of fig. 1 in a cross-section.

Corresponding components are designated in the figures with the same reference numerals.

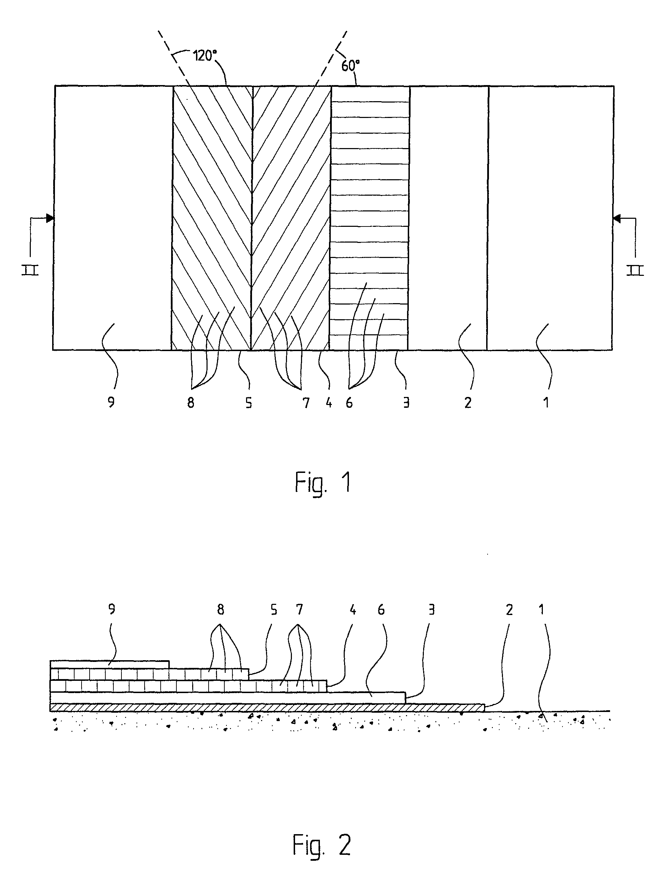

Fig. 1 shows a flat, supporting ground 1 of for instance sand cement, concrete, asphalt, anhydrite or wood fibre board of a floor, having thereon a finishing which consists of (in order from bottom to top) an elastic first layer 2 with a thickness of about 5 mm to about 50 mm and substantially consisting of bonded rubber granulate, a plastic foam material or a combination thereof, a second layer consisting of three mats 3, 4, 5, glued one on top of another with an elastic glue, of mutually parallel bamboo strips 6, 7, 8, with a width of about 5 mm, wherein strips 7 of the second mat 4 stacked on the first mat 3 cross strips 6 of this first mat 3 at an angle of 60°, and strips 8 of the third mat 5 cross strips 6 of the first mat 3 at an angle of 120°. A seamless elastic top layer 9 is arranged on the upper bamboo mat 5.

Fig. 2 shows the floor 1 with floor finishing 2-9 in cross-section along the line II-II in fig. 1.

With a sufficient thickness and a sufficient elasticity of the material of the first layer a finishing layer according to the shown embodiment has a high shock-absorbing capacity for sportsmen in all weight classes, has a low rotational friction on the surface, has a small overall height and has specific resilience characteristics corresponding in large measure to that of so-called area-elastic floor constructions.

## Claims

1. Finishing layer (2-9) for a floor (1), comprising a first layer (2) of a resilient material for laying on said floor (1), a second layer (3, 4, 5) of a substantially non-compressible material for laying on said first layer (2) and a top layer (9) for laying on said second layer (3, 4, 5), **characterized in that** the second layer is assembled from mats (3, 4, 5), which are each manufactured from mutually parallel strips (6, 7, 8) of a substantially non-compressible material.

2. Finishing layer (2-9) as claimed in claim 1, **characterized in that** the second layer comprises a stack of at least two mats (3, 4, 5).

3. Finishing layer (2-9) as claimed in claim 2, **characterized in that** the mutually parallel strips (7) of a second mat (4) stacked on a first mat (3) in each case cross the mutually parallel strips (6) of said first mat (3) at a determined angle.

4. Finishing layer (2-9) as claimed in claim 3, wherein the second layer (3, 4, 5) comprises a stack of n mats, wherein n is a whole number 2, 3 or 4, **characterized in that** the determined angle amounts to 180°/n.

5. Finishing layer (2-9) as claimed in claim 4, **characterized in that** the second layer comprises a stack of three mats (3, 4, 5), wherein the mutually parallel strips (7) of a second mat (4) stacked on a first mat (3) cross the mutually parallel strips (6) of said first mat (3) at an angle of 60°, and the mutually parallel strips (8) of a third mat (5) stacked on the second mat (4) cross the mutually parallel strips (7) of said second mat (4) at an angle of 60°, in a manner such that the mutually parallel strips (8, 6) of the third (5) and of the first mat (3) cross each other at an angle of 120°.

6. Finishing layer as claimed in any of the claims 1-5, **characterized in that** the substantially non-compressible material is wood.

7. Finishing layer (2-9) as claimed in any of the claims 1-5, **characterized in that** the substantially non-compressible material (6, 7, 8) is bamboo.

8. Finishing layer (2-9) as claimed in any of the claims 2-7, **characterized in that** the at least two mats (3, 4, 5) in the stack in the second layer are adhered to each other by means of an elastic adhesive.

9. Finishing layer (2-9) as claimed in any of the claims 1-8, **characterized in that** the first layer (2) comprises a rubber granulate.

10. Finishing layer (2-9) as claimed in any of the claims 1-8, **characterized in that** the first layer (2) comprises a plastic foam material.

11. Finishing layer (2-9) as claimed in any of the claims 1-10, **characterized in that** the top layer (9) comprises a hard plastic material.

12. Finishing layer (2-9) as claimed in claim 11, **characterized in that** the hard plastic material is one of the materials polyvinyl chloride (PVC), linoleum or polyurethane (PUR).

13. Finishing layer (2-9) as claimed in any of the claims 1-10, **characterized in that** the top layer (9) is assembled from at least two layers.

14. Finishing layer (2-9) as claimed in claim 13, **characterized in that** the top layer (9) is assembled from a bottom layer of a resilient material and a cover layer of an elastic plastic material covering this bottom layer.

15. Finishing layer (2-9) as claimed in claim 13, **characterized in that** the top layer (9) is assembled from a bottom layer of a resilient material and a cover layer of a hard plastic material covering this bottom layer.

16. Use of a finishing layer (2-9) as claimed in any of the claims 1-15 in a sports accommodation.
